# EUROPEAN PATENT SPECIFICATION

(11) **EP 4 510 845 B1**
(45) Date of publication and mention of the grant of the patent: **06.05.2026**
(21) Application number: 23720884.8
(22) Date of filing: 20.04.2023
(51) Int. Cl.: A23L 33/115, A23L 33/00

(54) **INFANT FORMULA WITH SPECIAL LIPID ARCHITECTURE FOR REDUCING CHILDHOOD BLOOD PRESSURE**
SÄUGLINGSNAHRUNG MIT SPEZIELLER LIPIDARCHITEKTUR ZUR SENKUNG DES BLUTDRUCKS BEI KINDERN
PRÉPARATION POUR NOURRISSONS AVEC ARCHITECTURE DE LIPIDES SPÉCIALE POUR RÉDUIRE LA PRESSION SANGUINE INFANTILE

(30) Priority: 20.04.2022 EP 22169085
(43) Date of publication of application: 26.02.2025
(73) Proprietor: N.V. Nutricia, 2712 HM Zoetermeer (NL)
(72) Inventor: ABRAHAMSE-BERKEVELD, Marieke, 3584 CT Utrecht (NL); SHAFAEIZADEH, Shila, 3584 CT Utrecht (NL)
(74) Representative: Nederlandsch Octrooibureau
(86) International application number: PCT/EP2023/060343
(87) International publication number: WO 2023/203156

(56) References cited:
- US-A1- 2014 170 260
- US-A1- 2014 248 391
- US-A1- 2015 173 405
- VAN ROSSEM LENIE ET AL: "Blood pressure in 12-year old children is associated with fatty acid composition of milk", HYPERTENSION, 1 October 2012 (2012-10-01), pages 1055 - 1060, XP055965669, Retrieved from the Internet <URL:https://www.ahajournals.org/doi/epub/10.1161/HYPERTENSIONAHA.112.197830> [retrieved on 20220928]
- FORSYTH J S ET AL: "Long chain polyunsaturated fatty acid supplementation in infant formula and blood pressure in later childhood: follow up of a randomised controlled trial", vol. 326, no. 7396, 3 May 2003 (2003-05-03), GB, pages 953 - 953, XP055965663, ISSN: 0959-8138, Retrieved from the Internet <URL:https://www.bmj.com/content/bmj/326/7396/953.1.full.pdf> DOI: 10.1136/bmj.326.7396.953
- RAZA GHULAM SHERE ET AL: "Invited review: Milk fat globule membrane-A possible panacea for neurodevelopment, infections, cardiometabolic diseases, and frailty", JOURNAL OF DAIRY SCIENCE, AMERICAN DAIRY SCIENCE ASSOCIATION, US, vol. 104, no. 7, 23 April 2021 (2021-04-23), pages 7345 - 7363, XP086627518, ISSN: 0022-0302, [retrieved on 20210423], DOI: 10.3168/JDS.2020-19649

## Description

### FIELD OF THE INVENTION

The invention relates to nutrition for infants, in particular infant formula, for use in reducing blood pressure in childhood.

### BACKGROUND OF THE INVENTION

Infant or follow on formulas are commonly used when breastfeeding is inadequate or unsuccessful for medical reasons, or because of a choice not to breastfeed. Commercial infant formulas are commonly used to provide supplemental or sole source of nutrition in early life. These formulas comprise a range of nutrients to meet the nutritional needs of the growing infant, and typically include fat, carbohydrate, protein, vitamins, minerals, and other nutrients helpful for optimal infant growth and development.

Nutritional experiences during an infant's first months of life can affect their susceptibility to chronic diseases in adulthood. Early nutritional experience during early periods of development can lead to regulatory mechanism programming: a phenomenon named metabolic imprinting.

High blood pressure is one of the leading health risk factors in the world. Blood pressure in adulthood is shown to be predicted by childhood pressure, tracking from childhood throughout adolescence and into adulthood. It has been shown that elevated blood pressure in childhood is associated with hypertension risk in adulthood (Yang et al., 2020, J Hypertens 38: 2346-2355). Observational studies have shown that higher maternal pre-pregnancy BMI, maternal hypertension, a relatively lower birth weight, shorter gestational age (preterm born), limited duration of breastfeeding and more rapid BMI gain in early life contribute to higher childhood blood pressure at 6 years of age.

Human milk lipids have a distinct physical structure composed of large lipid globules with an average volume-based mode diameter of about 4 µm existing of a triglyceride core coated by a tri-layer of membranes, the milk fat globule membrane (MFGM). The volume-based mode diameter of lipid droplets in standard infant formula is about 0.3-0.5 µm due to the industrial processing procedures to achieve stable and reproducible end products and is not surrounded by MFGM but mostly by proteins such as casein. Standard commercially available formulas also mostly contain vegetable oils and have small lipid droplets with proteins adhering to the surface. Infant formulas with lipid globules with an architecture more similar to the lipid globules in human milk have been described. In WO 2012/173467 the use of specifically designed lipid component with optimal fatty acid profile, an enhanced portion of the palmitic acid residues at the sn-2 position and present as lipid globules with a certain size and/or coating is disclosed for an early in life diet for improving the development of a healthy body composition, in particular prevention of obesity, later in life.

In the prior art in the field of infant nutrition in relation to childhood blood pressure, it is clear that the dietary supplementation of infant formulas with long-chain poly-unsaturated fatty acids (LCPUFAs) is associated with lower blood pressure in later childhood at 6 years of age (Forsyth et al. BMJ 2003 volume 326, bmj.com 2003;326:953). In addition, supplementation of infant formula with milk fat globule membrane (MFGM) components resulted in serum lipid status closer to breastfed infants at 12 months of age (intervention 0-6 months; Timby et al. Pediatr Res 2014, 76(4):394-400). This may be linked to lipid status later in life, but this particular clinical trial does not provide any information beyond 12 months of age. WO2013/153071 discloses a nutritional composition comprising MFGM and milk fat in the context of, among others, blood pressure and other relevant cardiovascular and metabolic diseases, although no effects on blood pressure in childhood is mentioned, and the composition does not contain large lipid globules. WO2013/191542 relates to an infant formula comprising milk fat, phospholipid coated large lipid globules, and MFGM as a source for phospholipids. Effects on obesity and body composition are the focus, although metabolic syndrome and cardiovascular disease are mentioned. Effects of the composition on blood pressure in childhood is not mentioned. WO2013/36122 also describes phospholipid coated large lipid globules and MFGM in the context of reducing the level of total blood cholesterol later on in life, including associated conditions such as high blood pressure.

Primary paediatric or childhood hypertension is associated with targeted organ damage, especially damage to the heart. Therefore it is crucial to look for potential precautions against developing elevated blood pressure in childhood and/or primary childhood hypertension.

### SUMMARY OF THE INVENTION

Following a nutritional intervention with the experimental formula in healthy term infants for the first 4 months of life, the inventors measured the blood pressure during follow-up at 5 years of age. The experimental infant formula comprised a lipid component in the form of large lipid globules coated with phospholipids. The control group received a control infant formula without a lipid component in the form of large lipid globules coated with phospholipids, but in the form of standard small lipid globules coated with protein. Both formulas were administered up to 17 weeks (4 months) of life. The control and experimental milk formula were similar in caloric content, as well as in total fat, carbohydrate and protein content.

This is the first investigation of a long term programming impact on childhood health outcomes using a nutritional composition comprising large lipid globules coated with phospholipids. The inventors found a beneficial impact of the composition on the (nutritional) programming of infant's metabolism, resulting in a lower blood pressure during childhood.

Specifically, the inventors surprisingly found that the measured diastolic and arterial blood pressure at 5 years of age in the group receiving the experimental formula was lower compared to the control group. The blood pressure remained significantly lower after correction for current childhood BMI.

These findings indicate that administration of an infant formula with a similar caloric content and macro-ingredient content can have a different and beneficial effect on the blood pressure in early childhood, leading to additional benefits not related to the reported beneficial impact of the addition of LCPUFAs to formula. This is due to the difference in configuration of the lipid component, with large lipid globules that are coated with phospholipids.

### DETAILED DESCRIPTION OF THE INVENTION

A first aspect of the present invention thus concerns a method for promoting the reduction of blood pressure in childhood and/or for reducing the risk of elevated blood pressure in childhood, in a child having an age of <13 years, said method comprising administering a nutritional composition selected from an infant formula and a follow-on formula to an infant, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids.

The invention can also be worded as a nutritional composition selected from an infant formula and a follow on formula for use in reducing the risk of elevated blood pressure in childhood, in a child having an age of <13 years , wherein the nutritional composition comprises lipid, protein and digestible carbohydrate, and wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids.

In some jurisdictions administering a nutritional composition to an infant is considered non-therapeutic. In those instances the invention can be worded as defined above by way of a method comprising administering a nutritional composition. For clarity, the method can also be defined as a non-therapeutic method for the reduction of blood pressure in childhood and/or for reducing the risk of elevated blood pressure in childhood as defined above. By definition, the words "non-therapeutic" exclude any therapeutic effect.

In some jurisdictions administering a nutritional composition to an infant is considered therapeutic per se. In this instance the invention can be worded as use of lipid globules in the manufacture of a nutritional composition selected from an infant formula and a follow on formula for reducing the risk of elevated blood pressure in childhood, in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids.

Preferably in the method, use or composition for use according to the invention, the reduction in blood pressure in childhood and/or reducing the risk of elevated blood pressure in childhood is when compared to a similar child who consumed an infant formula or follow-on formula not comprising lipid globules having a mode diameter, based on volume of at least 1.0 µm and not having a diameter of 2 to 12 µm in an amount of at least 45 volume % based on total lipid and not comprising on the surface a coating comprising phospholipids, more in particular when compared a similar child who consumed a standard infant formula of follow on formula comprising lipid globules with mode diameter, based on volume of about 0.5 µm and that do not have a coating comprising phospholipids.

A second aspect of the present invention concerns a method for preventing paediatric hypertension in a child having an age of <13 years, said method comprising administering a nutritional composition selected from an infant formula and a follow-on formula to an infant, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids.

The invention can also be worded as a nutritional composition selected from an infant formula and a follow on formula for use in preventing paediatric hypertension in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids.

The invention can also be worded as the use of lipid globules in the manufacture of a nutritional composition selected from an infant formula and a follow on formula for preventing paediatric hypertension in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids.

In the context of the present invention, the nutritional composition is not human milk. Also in context of the present invention, the nutritional composition is not cow's milk, in particular cow's milk that is not homogenised.

In the context of the present invention, the nutritional composition selected from an infant formula and a follow on formula preferably comprises 3 to 7 g lipid/100 kcal, 1.25 to 5 g protein/100 kcal and 6 to 18 g digestible carbohydrate/100 kcal.

### Lipid globule size

According to the present invention, the nutritional composition comprises lipid globules. When in liquid form these lipid globules are emulsified in the aqueous phase. Alternatively the lipid globules are present in a powder and the powder is suitable for reconstitution with water or another food grade aqueous phase, preferably to provide a ready to drink formula. The lipid globules comprise a core and a surface. The core preferably comprises vegetable fat and preferably comprises at least 90 wt% triglycerides and more preferably the core essentially consists of triglycerides. Not all vegetable lipids that are present in the composition need necessarily be comprised in the core of lipid globules, but preferably a major part is, preferably more than 50% wt%, more preferably more than 70 wt%, even more preferably more than 85 wt%, even more preferably more than 95 wt%, most preferably more than 98 wt% of the vegetable lipids that are present in the composition are comprised in the core of lipid globules. In one preferred embodiment the core of the lipid globules comprises at least 40 wt% triglycerides of vegetable origin, more preferably at least 50 wt%, even more preferably at least 70 wt% triglycerides of vegetable origin, more preferably the core of the lipid globules comprises at least 85 wt%, more preferably at least 95 wt% triglycerides of vegetable origin. The lipid globules in the nutritional composition preferably have a volume-weighted mode diameter above 1.0 µm, preferably above 3.0 µm, more preferably above 4.0 µm, preferably between 1.0 and 10 µm, more preferably between 2.0 and 8.0 µm, even more preferably between 3.0 and 8.0 µm, most preferably between 4.0 µm and 8.0 µm. Preferably in addition the size distribution is in such a way that at least 45 volume %, preferably at least 55 volume %, even more preferably at least 65 volume %, even more preferably at least 75 volume % of the lipid globules has a diameter between 2 and 12 µm. More preferably at least 45 volume %, preferably at least 55 volume %, even more preferably at least 65 volume %, even more preferably at least 75 volume % of the lipid globules has a diameter between 2 and 10 µm. Even more preferably at least 45 volume %, preferably at least 55 volume %, even more preferably at least 65 volume %, even more preferably at least 75 volume % of the lipid globules has a diameter between 4 and 10 µm. Preferably less than 5 volume % has a diameter above 12 um.

Standard infant formulae or follow on formulae typically have lipid globules with a mode diameter, based on volume below 0.5 µm, typically between 0.3-0.5 µm. Compared to infant formula with relatively small sized lipid globules, it was found that relatively large lipid globules have an unexpected lowering effect on blood pressure in childhood. The volume percentage of lipid globules is based on volume of total lipid. The mode diameter relates to the diameter which is the most present based on volume of total lipid, or the peak value in a graphic representation, having on the X-as the diameter and on the Y-as the volume (%).

The volume of the lipid globule and its size distribution can suitably be determined using a particle size analyzer such as a Mastersizer 2000 (Malvern Instruments, Malvern, UK), for example by the method described in Michalski et al, 2001, Lait 81: 787-796.

### Coating with phospholipids

According to the present invention, the nutritional composition comprises phospholipids. Phospholipids fall under the group polar lipids. Polar lipids are amphipathic in nature and include glycerophospholipids, glycosphingolipids, sphingomyelin and optionally cholesterol. Phospholipids relate to the sum of glycerophospholipids and sphingomyelin. Phospholipids are present as a coating on the surface of the lipid globule. By 'coating' is meant that the outer surface layer of the lipid globule comprises phospholipids, whereas these phospholipids are virtually absent in the core of the lipid globule. Not all phospholipids that are present in the composition need necessarily be comprised in the coating, but preferably a major part is. Preferably more than 30 wt%, more preferably more than 50 wt%, more preferably more than 70 wt%, even more preferably more than 85 wt%, most preferably more than 95 wt% of the phospholipids that are present in the composition are comprised in the coating of lipid globules. The nutritional composition preferably comprises at least 0.5 wt% phospholipids based on total lipid. Preferably the phospholipids comprise at least 5 wt% sphingomyelin based on total phospholipids, more preferably at least 7.5 wt%, even more preferably 10 wt.% sphingomyelin and most preferably at least 15 wt% sphingomyelin based on total phospholipids.

In the nutritional composition, the lipid globules preferably have a volume-weighted mode diameter of 1.0 µm or above, and are at least partly coated on the surface with phospholipids. Preferably the amount of phospholipids present in the nutritional composition ranges from 0.5 to 20 wt% phospholipids based on total lipid. A combination of large lipid globule size and phospholipid coating showed an unexpected lowering effect on blood pressure in childhood when compared to small and not phospholipid coated lipid globules.

According to the present invention, the nutritional composition preferably comprises glycerophospholipids. Glycerophospholipids are a class of lipids formed from fatty acids esterified at the hydroxyl groups on carbon-1 and carbon-2 of the backbone glycerol moiety and a negatively-charged phosphate group attached to carbon-3 of the glycerol via an ester bond, and optionally a choline group (in case of phosphatidylcholine, PC), a serine group (in case of phosphatidylserine, PS), an ethanolamine group (in case of phosphatidylethanolamine, PE), an inositol group (in case of phosphatidylinositol, PI) or a glycerol group (in case of phosphatidylglycerol, PG) attached to the phosphate group. Lysophospholipids are a class of phospholipids with one fatty acyl chain. Preferably the present composition contains PC, PS, PI and/or PE, more preferably at least PC.

Preferably the nutritional composition comprises sphingomyelin. Sphingomyelins have a phosphorylcholine or phosphorylethanolamine molecule esterified to the 1-hydroxy group of a ceramide. They are classified as phospholipid as well as sphingolipid, but are not classified as a glycerophospholipid nor as a glycosphingolipid. Preferably the nutritional composition comprises 0.05 to 10 wt% sphingomyelin based on total lipid, more preferably 0.1 to 5 wt%, even more preferably 0.2 to 2 wt%.

According to the present invention, the nutritional composition preferably comprises glycosphingolipids. The term glycosphingolipids as in the present invention particularly refers to glycolipids with an amino alcohol sphingosine. The sphingosine backbone is O-linked to a charged headgroup such as ethanolamine, serine or choline backbone. The backbone is also amide linked to a fatty acyl group. Glycosphingolipids are ceramides with one or more sugar residues joined in a β-glycosidic linkage at the 1-hydroxyl position. Preferably the nutritional composition contains gangliosides, more preferably at least one ganglioside selected from the group consisting of GM3 and GD3.

Sphingolipids are in the present invention defined as the sum of sphingomyelin and glycosphingolipids. Preferably the phospholipids are derived from milk lipids. Preferably the weight ratio of phospholipids : glycosphingolipids is from 2:1 to 10:1, more preferably 2:1 to 5:1.

Preferably the nutritional composition comprises 0.5 to 20 wt% phospholipids based on total lipid, more preferably 0.5 to 10 wt%, more preferably 1 to 10 wt%, even more preferably 2 to 10 wt% even more preferably 3 to 8 wt% phospholipids based on total lipid. Preferably the nutritional composition comprises 0.1 to 10 wt% glycosphingolipids based on total lipid, more preferably 0.5 to 5 wt%, even more preferably 2 to 4 wt%. Preferably the nutritional composition comprises 0.5 to 10 wt% (glycosphingolipids plus phospholipids) based on total lipid, more preferably 1.0 to 10 wt% (glycosphingolipids plus phospholipids) based on total lipid. In one embodiment, the nutritional composition comprises phospholipids, wherein the phospholipids comprise glycolipids, and/or are derived from or form part of the milk fat globule membrane (MFGM), preferably cow's milk MFGM.

According to the present invention, the nutritional composition preferably comprises cholesterol. The nutritional composition preferably comprises at least 0.005 wt% cholesterol based on total lipid, more preferably at least 0.01 wt%, more preferably at least 0.02 wt%, more preferably at least 0.05 wt%., even more preferably at least 0.1 wt%. Preferably the amount of cholesterol does not exceed 10 wt% based on total lipid, more preferably does not exceed 5 wt%, even more preferably does not exceed 1 wt% of total lipid.

According to the present invention, the nutritional composition preferably comprises 0.6 to 25 wt% polar lipids based on total lipid, wherein the polar lipids are the sum of phospholipids, glycosphingolipids, and cholesterol, more preferably 0.6 to 12 wt%, more preferably 1 to 10 wt%, even more preferably 2 to 10 wt%, even more preferably 3.0 to 10 wt% polar lipids based on total lipid, wherein the polar lipids are the sum of phospholipids, glycosphingolipids, and cholesterol.

Preferred sources for providing the phospholipids, glycosphingolipids and/or cholesterol are egg lipids, milk fat, buttermilk fat and butter serum fat, such as beta serum fat. A preferred source for phospholipids, particularly PC, is soy lecithin and/or sunflower lecithin. According to the present invention, the nutritional composition preferably comprises phospholipids derived from mammalian milk. Preferably the nutritional composition comprises phospholipids and glycosphingolipids derived from milk.

Preferably also cholesterol is obtained from milk. Preferably the polar lipids, in particular phospholipids, are derived from milk. Polar lipids, in particular phospholipids, derived from milk include the polar lipids, in particular phospholipids, isolated from milk lipid, cream lipid, cream serum lipid, butter serum lipid, beta serum lipid, whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from butter. Preferably the phospholipids, glycosphingolipids and/or cholesterol are obtained from milk cream. The nutritional composition preferably comprises phospholipids, glycosphingolipids and/or cholesterol from milk of cows, mares, sheep, goats, buffalos, horses and camels. It is most preferred to use a lipid extract isolated from cow's milk. The use of polar lipids from milk fat advantageously comprises the polar lipids from milk fat globule membranes, which are more reminiscent to the situation in human milk. Polar lipids, in particular phospholipids, derived from fat milk advantageously are more effective in lowering blood pressure in childhood than polar lipids from other sources. The polar lipids, in particular phospholipids, are located on the surface of the lipid globule, i.e. as a coating or outer layer. It is considered that when the phospholipids are present in the coating of the lipid globule they are more effective than when they are dry blended into the powdered product, i.e. present as ingredient as such. A suitable way to determine whether the polar lipids, in particular phospholipids, are located on the surface of the lipid globules is laser scanning microscopy. Suitable commercially available sources for milk polar lipids including phospholipids are BAEF, SM2, SM3 and SM4 powder of Corman, Salibra of Glanbia, and LacProdan MFGM-10 or PL20 from Arla. Preferably the source of milk polar lipids comprises at least 4 wt% phospholipids based on total lipid, more preferably 7 to 75 wt%, most preferably 20 to 70 wt% phospholipids based on total lipid. Preferably the weight ratio phospholipids to protein is above 0.10, more preferably above 0.20, even more preferably above 0.3. Preferably at least 25 wt%, more preferably at least 40 wt%, most preferably at least 75 wt% of the polar lipids, in particular phospholipids, is derived from milk polar lipids.

Methods for obtaining lipid globules with an increased size and coating with phospholipids are disclosed in WO 2010/0027258, WO 2010/0027259 and WO 2013/135738.

### Infant formula and follow on formula

The nutritional composition is selected from an infant formula and a follow on formula. This means that the present nutrition composition is not human milk. Alternatively the term "formula" means that it concerns a composition that is artificially made or in other words that it is synthetic. Hence in one embodiment the nutritional composition is selected from an artificial infant formula and an artificial follow on formula or a synthetic infant formula and a synthetic follow on formula. In the present context, infant formula refers to nutritional compositions, artificially made, intended for infants of 0 to about 4 to 6 months of age and are intended as a substitute for human milk. Typically infant formulae are suitable to be used as sole source of nutrition. Such formulae are also known as starter formula. Formula for infants starting with at 4 to 6 months of life to 12 months of life are intended to be supplementary feedings to infants that start weaning on other foods. Such formulae are also known as follow on formulae. Infant and follow on formulae are subject to strict regulations, for example for the EU Commission Directive 2016/127.

The nutritional composition preferably comprises 3 to 7 g lipid/100 kcal, more preferably 4 to 6 g lipid/100 kcal, most preferably 4.5 to 5.5 g lipid/100 kcal, 1.25 to 5 g protein/100 kcal, more preferably 1.35 to 4 g protein/100 kcal, more preferably 1.5 to 3 g protein/100 kcal, more preferably 1.25 to 2.5 g protein/100 kcal, more preferably 1.25 to 2.25 g/100 kcal, even more preferably 1.25 to 2.1 g protein/100 kcal and 6 to 18 g digestible carbohydrate/100 kcal, more preferably 8 to 16 g digestible carbohydrate/100 kcal, most preferably 10 to 15 g digestible carbohydrate/100 kcal.

### Lipid

Herein LA refers to linoleic acid (18:2 n6); ALA refers to α-linolenic acid (18:3 n3); PUFA refers to polyunsaturated fatty acids; MUFA refers to monounsaturated fatty acids; LC-PUFA refers to long chain polyunsaturated fatty acids comprising at least 20 carbon atoms and with 2 or more unsaturated bonds; DHA refers to docosahexaenoic acid (22:6, n3); EPA refers to eicosapentaenoic (20:5 n3); ARA refers to arachidonic acid (20:4 n6); DPA refers to docosapentaenoic acid (22:5 n3). PA relates to palmitic acid (C16:0). Medium chain fatty acids (MCFAs) refer to fatty acids with 8 or 10 or 12 carbon atoms. In the context of the present invention it is to be understood that a reference to fatty acid means that it can be attached to a glycerol backbone.

The lipid in the nutritional composition preferably comprises vegetable lipids. The lipid that is present in the nutritional composition preferably comprises PUFAs, more preferably LC-PUFAs. The nutritional composition preferably comprises 5 to 35 wt% PUFA, more preferably 10 to 30 wt% PUFA, most preferably 15 to 20 wt% PUFA, based on total fatty acids. In one preferred embodiment the lipid in the nutritional composition comprises at least 10 wt% polyunsaturated fatty acid based on total fatty acids. It is also preferred that the nutritional composition comprises monounsaturated fatty acid (MUFAs), preferably 10 to 80 wt% MUFA, more preferably 20 to 70 wt% MUFA, most preferably 35 to 55 wt% MUFA, based on total fatty acids. In the context of the present invention, a weight percentage of fatty acids based on total fatty acids is calculated as if all fatty acids are free fatty acids, hence it is not taken into account whether a fatty acid is attached to a glycerol backbone or not.

LA preferably is present in a sufficiently balanced amount for healthy growth. The nutritional composition therefore preferably comprises less than 20 wt% LA based on total fatty acids, more preferably 5 to 16 wt%, most preferably 10 to 14.5 wt%. Preferably, the nutritional composition comprises at least 5 wt% LA based on total fatty acids. Per 100 kcal, the nutritional composition preferably comprises 350 - 1400 mg LA. Preferably, ALA is present in a sufficiently balanced amount for healthy growth. The nutritional composition therefore preferably comprises at least 1.0 wt% ALA based on total fatty acids. More preferably the nutritional composition comprises at least 1.5 wt% ALA based on total fatty acids, most preferably at least 2.0 wt%. Preferably the nutritional composition comprises less than 12.5 wt% ALA, more preferably less than 10.0 wt%, most preferably less than 5.0 wt%. Preferably the nutritional composition comprises a weight ratio of LA/ALA from 2 to 20, more preferably from 3 to 16, more preferably from 4 to 14, most preferably from 5 to 12.

Preferably the nutritional composition comprises less than 10 wt% short chain fatty acids based on total fatty acids, more preferably less than 8 wt%, even more preferably less than 6 wt%, most preferably less than 5 wt%. Preferably the nutritional composition comprises at least 0.5 wt% short chain fatty acids based on total fatty acids, more preferably at least 0.6 wt%, preferably at least 0.9 wt%, more preferably at least 1.2 wt%, more preferably at least 2.0 wt%. Short chain fatty acids are fatty acids with an acyl chain of 2 to 6 carbon atoms. Preferably the nutritional composition comprises less than 10 wt% butyric acid (acyl chain of 4 carbon atoms) based on total fatty acids, more preferably less than 8 wt%, more preferably less than 6 wt%, even more preferably less than 5 wt%, most preferably less than 4 wt%. Preferably the nutritional composition comprises at least 0.5 wt% butyric acid based on total fatty acids, preferably at least 0.6 wt%, preferably at least 0.9 wt%, more preferably at least 1.2 wt%. The nutritional composition preferably comprises at least 3 wt% medium-chain fatty acids (MCFA) based on total fatty acids, more preferably at least 10 wt%, even more preferably 15 wt%. The present composition advantageously comprises less than 50 wt% MCFA based on total fatty acids, more preferably less than 30 wt%, even more preferably less than 20 wt%.

According to the present invention, the nutritional composition preferably comprises LC-PUFA, more preferably n-3 LC-PUFA. More preferably, the nutritional composition comprises EPA, DPA and/or DHA, even more preferably DHA. The content of n-3 LC-PUFA in the nutritional composition, more preferably DHA, preferably does not exceed 15 wt% of the total fatty acid content, preferably does not exceed 10 wt%, even more preferably does not exceed 5 wt%. Preferably the nutritional composition comprises at least 0.15 wt%, preferably at least 0.35 wt%, more preferably at least 0.75 wt%, n-3 LC-PUFA, more preferably DHA, of the total fatty acid content. In one embodiment, the present composition comprises at least 0.15 wt% n-3 LC-PUFA based on total fatty acids selected from the group consisting of DHA, EPA, and DPA, more preferably DHA.

As the group of n-6 fatty acids, especially arachidonic acid (ARA) and LA as its precursor, counteracts the group of n-3 fatty acids, especially DHA and EPA and ALA as their precursor, the nutritional composition comprises relatively low amounts of ARA. The n-6 LC-PUFA, more preferably ARA, content preferably does not exceed 5 wt%, more preferably does not exceed 2.0 wt%, more preferably does not exceed 0.75 wt%, even more preferably does not exceed 0.5 wt%, based on total fatty acids. ARA may also be absent.

### Palmitic acid at sn-2 position of triglyceride

The lipid in the nutritional composition preferably comprises triglycerides. Triglycerides comprise a glyceride molecule to which, via ester bonds, three fatty acid residues are attached, which may be the same or different, and which are generally chosen from saturated and unsaturated fatty acids containing 6 to 26 carbon atoms, including but not limited to LA, ALA, oleic acid (C18:1), palmitic acid (PA; C16:0) and/or stearic acid (SA; C18:0). Such fatty acid triglycerides may differ in the fatty acid residues that are present and/or in the respective position(s) of the fatty acid residues, e.g. in the sn-1, -2 and/or -3 position. Preferably the triglycerides used in the nutritional composition are chosen such that the amount of PA residues that are present in the triglycerides are 10 wt% or more based on total fatty acids present in the triglycerides, preferably more than 15 wt%. Thus in one embodiment in the nutritional composition, the lipid comprises triglycerides that comprise at least 10 wt% palmitic acid based on total fatty acids, and wherein at least 15 wt% of the palmitic acid, by weight of total palmitic acid, is present at the sn-2 position of triglycerides. Preferably the amount of PA residues that are present in the triglycerides is below 30 wt%, more preferably ranges from 16 to 24 wt%, based on total fatty acids. Preferably the triglycerides used in the nutritional composition are chosen such that, of the total PA residues present in the triglyceride at least 15 wt%, preferably at least 20 wt%, more preferably at least 30 wt%, even more preferably at least 35 wt%, and most preferably at least 40 wt% of the PA are in the sn-2 or beta position of triglycerides.

Suitable triglycerides for the nutritional composition are commercially available, e.g. from Loders Croklaan under the name Betapol^{™} and/or can be prepared in a manner known per se, for instance as described in EP 0 698 078 and/or EP 0 758 846. Another suitable source is InFat^{™} of Enzymotec. In case these lipids are obtained by trans- or interesterification of vegetable triglycerides, these sources are in the context of the present invention regarded as vegetable lipids.

A preferred source for triglycerides having palmitic acid at the sn-2 or beta position of the triglyceride is non-human animal fat, more preferably non-human mammalian milk fat, even more preferably cow's milk fat. Preferably non-human mammalian milk fat, in particular cow's milk fat, is preferably used in the form of anhydrous milk fat or butter oil. Preferably the source of the milk fat is in a homogenous fat phase, such as butter oil or anhydrous milk fat, and not in the form of oil in water emulsion such as cream, since the lipid globules of the present nutritional composition can be more easily prepared when in a homogenous fat phase. Thus in one preferred embodiment in the nutritional composition, the lipid comprises milk fat, preferably cow's milk fat, in an amount from 10 to 100 wt% based on total lipid, preferably from 10 to 80 wt% based on total lipid, more preferably from 10 to 70 wt%, more preferably from 20 to 80 wt%, more preferably from 20 to 70 wt%, more preferably from 30 to 70 wt%, more preferably from 15 to 60 wt%, more preferably from 20 to 60 wt%, even more preferably from 25 to 55 wt% based on total lipid.

An unexpected lowering effect on blood pressure in childhood was observed when such lipid component with increased amounts of palmitic acid located at the sn-2 position of triglyceride molecules was applied.

In a preferred embodiment the invention concerns a nutritional composition selected from an infant formula and a follow on formula for use in reducing the risk of elevated blood pressure in childhood, in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids and the lipid comprises triglycerides that comprise at least 10 wt% palmitic acid based on total fatty acids, and wherein at least 15 wt% of the palmitic acid based on total palmitic acid is present at the sn-2 position of triglycerides. Preferably the nutritional composition comprises 0.5 to 20 wt% phospholipids based on total lipids.

In another preferred embodiment the invention concerns a nutritional composition selected from an infant formula and a follow on formula for use in reducing the risk of elevated blood pressure in childhood, in a child having an age of <13 years, wherein the nutritional composition comprises lipid, protein and digestible carbohydrate, and wherein the lipid contains at least 10 wt% mammalian milk fat, in particular cow's milk fat, based on total lipids, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids. Preferably the nutritional composition comprises 0.5 to 20 wt% phospholipids based on total lipids.

In another preferred embodiment the invention concerns a nutritional composition selected from an infant formula and a follow on formula for use in preventing paediatric hypertension in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids and the lipid comprises triglycerides that comprise at least 10 wt% palmitic acid based on total fatty acids, and wherein at least 15 wt% of the palmitic acid based on total palmitic acid is present at the sn-2 position of triglycerides. Preferably the nutritional composition comprises 0.5 to 20 wt% phospholipids based on total lipids.

In another preferred embodiment the invention concerns a nutritional composition selected from an infant formula and a follow on formula for use in preventing paediatric hypertension in a child having an age of <13 years, wherein the nutritional composition comprises lipid, protein and digestible carbohydrate, and wherein the lipid contains at least 10 wt% mammalian milk fat, in particular cow's milk fat, based on total lipids, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids. Preferably the nutritional composition comprises 0.5 to 20 wt% phospholipids based on total lipids.

The invention can also be worded as the use of lipid globules in the manufacture of a nutritional composition selected from an infant formula and a follow on formula for reducing the risk of elevated blood pressure in childhood, in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids and the lipid comprises triglycerides that comprise at least 10 wt% palmitic acid based on total fatty acids, and wherein at least 15 wt% of the palmitic acid based on total palmitic acid is present at the sn-2 position of triglycerides. Preferably the nutritional composition comprises 0.5 to 20 wt% phospholipids based on total lipids.

The invention can also be worded as the use of lipid globules in the manufacture of a nutritional composition selected from an infant formula and a follow on formula for reducing the risk of elevated blood pressure in childhood, in a child having an age of <13 years, wherein the nutritional composition comprises lipid, protein and digestible carbohydrate, and wherein the lipid contains at least 10 wt% mammalian milk fat, in particular cow's milk fat, based on total lipids, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids. Preferably the nutritional composition comprises 0.5 to 20 wt% phospholipids based on total lipids.

The invention can also be worded as the use of lipid globules in the manufacture of a nutritional composition selected from an infant formula and a follow on formula for use in preventing paediatric hypertension in a child having an age of <13 years, wherein the nutritional composition comprises lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids and the lipid comprises triglycerides that comprise at least 10 wt% palmitic acid based on total fatty acids, and wherein at least 15 wt% of the palmitic acid based on total palmitic acid is present at the sn-2 position of triglycerides. Preferably the nutritional composition comprises 0.5 to 20 wt% phospholipids based on total lipids.

The invention can also be worded as the use of lipid globules in the manufacture of a nutritional composition selected from an infant formula and a follow on formula for use in preventing paediatric hypertension in a child having an age of <13 years, wherein the nutritional composition comprises lipid, protein and digestible carbohydrate, and wherein the lipid contains at least 10 wt% mammalian milk fat, in particular cow's milk fat, based on total lipids, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids. Preferably the nutritional composition comprises 0.5 to 20 wt% phospholipids based on total lipids.

Preferably the reduction in blood pressure in childhood and/or reduction in the risk of elevated blood pressure in childhood is when compared to a similar child who consumed an infant formula or follow-on formula not comprising lipid globules having a mode diameter, based on volume of at least 1.0 µm and having a diameter of 2 to 12 µm in an amount of at least 45 volume % based on total lipid and not comprising on the surface a coating comprising phospholipids, and comprising less than 10 wt% mammalian milk fat based on total lipid, more in particular when compared to a similar child who consumed a standard infant formula of follow on formula comprising lipid globules with a mode diameter, based on volume of about 0.5 µm and that do not have a coating comprising phospholipids and comprise at least about 97 wt% vegetable lipid based on total lipid.

### Protein

The nutritional composition preferably comprises proteins, preferably in the amounts specified above. The source of the protein is preferably selected in such a way that the minimum requirements for essential amino acid content are met and satisfactory growth is ensured. Hence protein sources based on cows' milk proteins such as whey, casein and mixtures thereof and proteins based on soy, potato or pea are preferred. In case whey proteins are used, the protein source is preferably based on acid whey or sweet whey, whey protein isolate or mixtures thereof and may include α-lactalbumin and β-lactoglobulin. More preferably, the protein source is based on acid whey or sweet whey from which caseino-glyco-macropeptide (CGMP) has been removed. Preferably the composition comprises at least 3 wt% casein based on dry weight. Preferably the casein is intact and/or non-hydrolyzed. For the present invention protein includes peptides and free amino acids.

### Digestible carbohydrates

The nutritional composition preferably comprises digestible carbohydrate, preferably in the amounts specified above. Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The nutritional composition preferably comprises lactose. The nutritional composition preferably comprises digestible carbohydrate, wherein at least 35 wt%, more preferably at least 50 wt%, more preferably at least 75 wt%, even more preferably at least 90 wt%, most preferably at least 95 wt% of the digestible carbohydrate is lactose. Based on dry weight the present composition preferably comprises at least 25 wt% lactose, preferably at least 40 wt%.

### Non digestible carbohydrates

In one preferred embodiment the nutritional composition comprises non-digestible oligosaccharides. Preferably the nutritional composition comprises non-digestible oligosaccharides with a degree of polymerization (DP) from 2 to 250, more preferably from 3 to 60.

Preferably the present composition comprises fructo-oligosaccharides, inulin and/or galacto-oligosaccharides, more preferably galacto-oligosaccharides, most preferably transgalacto-oligosaccharides. In a preferred embodiment the composition comprises a mixture of transgalacto-oligosaccharides and fructo-oligosaccharides or inulin. Suitable non-digestible oligosaccharides are for example Vivinal GOS (FrieslandCampina DOMO), Raftilin HP or Raftilose (Orafti).

Preferably, the nutritional composition comprises of 80 mg to 2 g non-digestible oligosaccharides per 100 ml, more preferably 150 mg to 1.50 g, even more preferably 300 mg to 1 g per 100 ml. Based on dry weight, the nutritional composition preferably comprises 0.25 wt% to 20 wt%, more preferably 0.5 wt% to 10 wt%, even more preferably 1.5 wt% to 7.5 wt% of non-digestible oligosaccharides.

### Application

In the method or use according to the present invention, a nutritional composition is administered to an infant or is used in an infant. In the context of the present invention an infant has an age up to 12 months. Preferably the nutritional composition is administered to or is used in a term born infant. A term born infant means an infant born at a gestational age of 37 to 42 weeks. Preferably the nutritional composition is administered to or is used in a healthy infant. Preferably the nutritional composition is used at least during the first 2 months of life, preferably at least during the first 3 months of life of the infant, more preferably at least during the first 4 months of life of the infant. Preferably the nutritional composition is administered to an infant with an age below 12 months, preferably below 6 months, more preferably below 4 months of age. In a preferred embodiment, the nutritional composition is administered to an infant having an age of 0 to 6 months, preferably 0 to 4 months.

The present invention provides a nutritional composition for use in reducing the risk of elevated blood pressure in childhood. With childhood a child having an age of <13 years is meant. , The reducing the risk of elevated blood pressure in childhood, is in a child having an age of <13 years, preferably in a child having an age of <10 years, preferably in a child having an age of <8 years, preferably in a child having an age of <6 years, preferably in the first 5 years of life of the child, preferably at an age of 5 years, and wherein the child is preferably at least 1 year old.

The present invention provides a nutritional composition for use in preventing paediatric hypertension in a subject. With paediatric hypertension, hypertension in a child having an age of <13 years is meant. The prevention of paediatric hypertension is in a child having an age of <13 years, preferably in a child having an age of <10 years, preferably in a child having an age of <8 years, preferably in a child having an age of <6 years, preferably in the first 5 years of life of the child, preferably at an age of 5 years, and wherein the child is preferably at least 1 year old

Preferably the blood pressure is that for diastolic blood pressure or arterial blood pressure, or diastolic blood pressure and arterial blood pressure

In one embodiment according to the present invention a reduced blood pressure in an infant is promoted, and/or a higher blood pressure in an infant and child is reduced or the risk thereof is reduced.

### EXAMPLES

### Example 1: Experimental and control formula

### Diet 1: Control formula

An infant formula with per 100 ml ready to drink formula 66 kcal, 1.3 g protein (whey protein and casein in a 6/4 w/w ratio), 7.3 g digestible carbohydrates (mainly lactose), 3.4 g fat and 0.8 g short chain galacto-oligosaccharides (source Vivinal^{®}GOS) and long chain fructo-oligosaccharides (source RaftilinHP^{®}) in a 9/1 w/w ratio, and minerals, vitamins trace elements and other micronutrients as known in the art and in compliance with directives for infant formula. The formula is provided as a powder with the instruction to reconstitute with water. About 13.6 g powder was reconstituted to 100 ml ready to drink infant formula.

The fat component comprised mainly vegetable fat (blend of palm oil, low erucic acid rape seed oil, coconut oil, high oleic sunflower oil, sunflower oil, a small amount of soy lecithin (0.13 wt%) and about 1.5 wt% of an LC-PUFA premix (fish oil and microbial oil).

The lipid globules had a mode diameter, based on volume, of about 0.5 µm, and the volume % of lipid globules with a mode between 2 and 12 µm was below 10.

### Diet 2: Experimental infant formula

An infant formula similar as diet 1, except for the following:
The fat component consisted of about 51 wt% vegetable fat (blend of low erucic acid rape seed oil, coconut oil, high oleic sunflower oil, sunflower oil), about 44 wt% bovine anhydrous milk fat, 1.5 wt% LC-PUFA containing oil (fish oil and microbial oil), 0.13 wt% soy lecithin, about 3.6 wt% milk fat derived from buttermilk rich in milk phospholipids or milk fat globule membranes (milk phospholipids are about 1.5 wt% based on total lipid).

The lipid globules had a mode diameter, based on volume, of about 5.6 µm, and the volume % of lipid globules with a mode between 2 and 12 µm was above 45. Phospholipids were present in the coating on the lipid globules.

The fatty acid composition is very similar between diet 1 and 2, in saturated, mono unsaturated and poly unsaturated acids, and in n3 and n6 PUFA content. The amount of palmitic acid was 18.4 wt% and 17.7 wt% (based on total fatty acids) for diet 1 and 2, respectively. For diet 2 about 36 wt% of the palmitic acid residues was in the sn-2 position, for diet 1 this was about 13 wt%. The amount of C4:0 (butyric acid) was 0.10 wt% in diet 1 and 1.39 wt% in diet 2, C6:0 (caproic acid) was 0.24 wt% in diet 1 and 0.98 wt% in diet 2. The wt% are based on total fatty acids in the infant formula.

### Example 2: Study protocol and study population

After parent(s)/legal guardian(s) had signed informed consent, exclusively formula fed infants eligible for participation were randomised to receive either the experimental product or the control product for a double-blind period of maximally 17 weeks (depending on their age at study entry). Parents whose infant took part in the study until 17 weeks (4 months) of age and who did not withdraw their consent were asked to participate in the follow-up study that took place between 3-5 years of age.

Systolic and diastolic blood pressure was measured at the right brachial artery using a sphygmomanometer while the subject was in sitting position after 5 minutes of rest, and the mean blood pressure was recorded as average of four measurements. All measurements were performed by trained study personnel using calibrated equipment and according to standard protocols.

Arterial blood pressure (ABP) was defined based on systolic (SBP) and diastolic (DBP) blood pressure as following: ABP = (1/3 * SBP) + (2/3*DBP). According to the AAP Clinical Practice Guidelines, blood pressure outcomes were defined as normal (<90^{th} percentile), elevated (values from ≥90^{th} to <95^{th} percentile) or hypertensive (≥95^{th} percentile) according to age-, sex- and height-standardized SBP or DBP values. For the evaluation of blood pressure outcomes and after confirmation of normality assumption, an analysis of covariance (ANCOVA) was used with treatment group as fixed effect and sex, education of the mother, maternal pre-pregnancy BMI, continent (Europe, Asia) as covariates (results not presented) and additionally child BMI at 5 years as covariate (see Table 1).

All statistical analyses were performed using SAS^{®} (SAS Enterprise Guide 4.3 or higher) for Windows (SAS Institute Inc., Cary, NC).

### Results blood pressure measurements

The results for blood pressure measurements are listed in table 1.

**Table 1: Estimated mean blood pressure outcomes at 5 years of age**

| Blood pressure (mmHg) | Experimental group (n = 47) | Control group (n= 46) | Difference in estimated means (95%CI) Experimental vs Control [P-value] |
|---|---|---|---|
| Systolic blood pressure | 94.6 | 97.1 | -2.4 (-5.7, 0.9) [0.154] |
| Diastolic blood pressure | 57.4 | 61.7 | -4.3 (-7.3, -1.3) [0.005] |
| Arterial blood pressure | 69.8 | 73.5 | -3.7 (-6.5, -0.9) [0.010] |

The estimated mean diastolic and arterial blood pressure were both statistically significantly lower in the experimental group than in the control group. Also systolic blood pressure was lower in the experimental group compared to the control group, albeit not statistically significant.

Children with elevated blood pressure or hypertension in the 5 year follow up visit were identified. In table 2 the number of infants having normal blood pressure, elevated blood pressure and hypertension are reported.

**Table 2: Blood pressure outcomes at 5 years of age**

| | Experimental group (total 46*) | Control group (total 45*) |
|---|---|---|
| Normal blood pressure | 37 | 28 |
| Elevated blood pressure | 6 | 9 |
| Hypertension | 3 | 8 |

| | | |
|---|---|---|
| * For one child in each group height was not recorded meaning that for those children the blood pressure category (normal, elevated, hypertension) could not be determined. | | |

Compared to the control group, and after correction for covariates including current child BMI at 5 years, the probability of elevated blood pressure was lower for children in the experimental group.

## Claims

1. A nutritional composition selected from an infant formula and a follow on formula comprising lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids, for use in reducing the risk of elevated blood pressure in childhood, in a child having an age of <13 years.

2. The nutritional composition for use according to claim 1, wherein reducing the risk of elevated blood pressure in childhood is when compared to a similar child who consumed an infant formula or follow on formula comprising lipid globules with a mode diameter, based on volume of about 0.5 µm and that do not have a coating comprising phospholipids.

3. The nutritional composition for use according to any one of the preceding claims, wherein the blood pressure is diastolic blood pressure or arterial blood pressure, or diastolic blood pressure and arterial blood pressure.

4. A nutritional composition selected from an infant formula and a follow on formula comprising lipid, protein and digestible carbohydrate, wherein the nutritional composition comprises lipid globules that have a volume-weighted mode diameter of at least 1.0 µm and/or wherein least 45 vol.% of the lipid globules have a diameter from 2 to 12 µm and wherein the lipid globules have a coating comprising phospholipids, for use in preventing paediatric hypertension in a child having an age of <13 years.

5. The nutritional composition for use according to any one of the preceding claims, wherein the nutritional composition is administered to an infant having an age of 0 to 6 months, preferably 0 to 4 months.

6. The nutritional composition for use according to claim 5, wherein the infant is a term born infant.

7. The nutritional composition for use according to claim 5 or 6, wherein the infant is a healthy infant.

8. The nutritional composition for use according to any one of the preceding claims which comprises at least 0.5 wt% phospholipids based on total lipid.

9. The nutritional composition for use according to any one of the preceding claims wherein the phospholipids comprise at least 5 wt% sphingomyelin based on total phospholipids.

10. The nutritional composition for use according to any one of the preceding claims, wherein the phospholipids are derived from milk lipids.

11. The nutritional composition for use according to any one of the preceding claims, wherein the lipid comprises triglycerides that comprise at least 10 wt% palmitic acid based on total fatty acids, and wherein at least 15 wt% of the palmitic acid, based on total palmitic acid, is present at the sn-2 position of triglycerides.

12. The nutritional composition for use according to any one of the preceding claims, wherein the lipid comprises at least 10 wt% milk fat, preferably cow's milk fat, based on total lipid.

13. The nutritional composition for use according to any one of the preceding claims, wherein the formula is a powder, suitable to reconstitute with water to provide a ready to drink formula.

## Patentansprüche

1. Nahrungsmittelzusammensetzung, ausgewählt aus einer Säuglingsanfangsnahrung und einer Folgenahrung, umfassend Lipide, Proteine und verdauliche Kohlenhydrate, wobei die Nahrungsmittelzusammensetzung Lipidkügelchen umfasst, die einen volumengewichteten modalen Durchmesser von mindestens 1,0 µm aufweisen, und/oder wobei mindestens 45 Vol.-% der Lipidkügelchen einen Durchmesser von 2 bis 12 µm aufweisen und wobei die Lipidkügelchen eine Phospholipide umfassende Beschichtung aufweisen, zur Anwendung bei der Verringerung des Risikos für erhöhten Blutdruck im Kindesalter bei einem Kind im Alter von <13 Jahren.

2. Nahrungsmittelzusammensetzung zur Anwendung nach Anspruch 1, wobei die Verringerung des Risikos für erhöhten Blutdruck im Kindesalter im Vergleich zu einem ähnlichen Kind erfolgt, das eine Säuglingsanfangsnahrung oder Folgenahrung konsumiert hat, die Lipidkügelchen mit einem volumenbasierten modalen Durchmesser von etwa 0,5 µm umfasst, die keine Phospholipide umfassende Beschichtung aufweisen.

3. Nahrungsmittelzusammensetzung zur Anwendung nach einem der voranstehenden Ansprüche, wobei der Blutdruck der diastolische Blutdruck oder der arterielle Blutdruck oder der diastolische Blutdruck und der arterielle Blutdruck ist.

4. Nahrungsmittelzusammensetzung, ausgewählt aus einer Säuglingsanfangsnahrung und einer Folgenahrung, umfassend Lipide, Proteine und verdauliche Kohlenhydrate, wobei die Nahrungsmittelzusammensetzung Lipidkügelchen umfasst, die einen volumengewichteten modalen Durchmesser von mindestens 1,0 µm aufweisen, und/oder wobei mindestens 45 Vol.-% der Lipidkügelchen einen Durchmesser von 2 bis 12 µm aufweisen und wobei die Lipidkügelchen eine Phospholipide umfassende Beschichtung aufweisen, zur Anwendung bei der Vorbeugung von pädiatrischer Hypertonie bei einem Kind im Alter von <13 Jahren.

5. Nahrungsmittelzusammensetzung zur Anwendung nach einem der voranstehenden Ansprüche, wobei die Nahrungsmittelzusammensetzung einem Säugling im Alter von 0 bis 6 Monaten, vorzugsweise 0 bis 4 Monaten, verabreicht wird.

6. Nahrungsmittelzusammensetzung zur Anwendung nach Anspruch 5, wobei der Säugling ein termingerecht geborener Säugling ist.

7. Nahrungsmittelzusammensetzung zur Anwendung nach Anspruch 5 oder 6, wobei der Säugling ein gesunder Säugling ist.

8. Nahrungsmittelzusammensetzung zur Anwendung nach einem der voranstehenden Ansprüche, die mindestens 0,5 Gew.-% Phospholipide, bezogen auf die Gesamtlipide, umfasst.

9. Nahrungsmittelzusammensetzung zur Anwendung nach einem der voranstehenden Ansprüche, wobei die Phospholipide mindestens 5 Gew.-% Sphingomyelin, bezogen auf die Gesamtphospholipide, umfassen.

10. Nahrungsmittelzusammensetzung zur Anwendung nach einem der voranstehenden Ansprüche, wobei die Phospholipide aus Milchlipiden stammen.

11. Nahrungsmittelzusammensetzung zur Anwendung nach einem der voranstehenden Ansprüche, wobei das Lipid Triglyceride umfasst, die mindestens 10 Gew.-% Palmitinsäure, bezogen auf die gesamten Fettsäuren, umfassen, und wobei mindestens 15 Gew.-% der Palmitinsäure, bezogen auf die gesamte Palmitinsäure, an der sn-2-Position der Triglyceride vorhanden sind.

12. Nahrungsmittelzusammensetzung zur Anwendung nach einem der voranstehenden Ansprüche, wobei das Lipid mindestens 10 Gew.-% Milchfett, vorzugsweise Kuhmilchfett, bezogen auf das Gesamtlipid, umfasst.

13. Nahrungsmittelzusammensetzung zur Anwendung nach einem der voranstehenden Ansprüche, wobei die Formulierung ein Pulver ist, das geeignet ist, sich mit Wasser zu rekonstituieren, um eine trinkfertige Nahrung bereitzustellen.

## Revendications

1. Composition nutritionnelle choisie parmi une préparation pour nourrissons et une préparation de suite comprenant des lipides, des protéines et des glucides digestibles, où la composition nutritionnelle comprend des globules lipidiques ayant un diamètre modal pondéré en fonction du volume d'au moins 1,0 µm et/ou où au moins 45 % en volume des globules lipidiques ont un diamètre compris entre 2 et 12 µm et où les globules lipidiques ont un enrobage comprenant des phospholipides, pour son utilisation dans la réduction du risque de pression sanguine élevée pendant l'enfance, chez un enfant âgé de <13 ans.

2. Composition nutritionnelle pour son utilisation selon la revendication 1, où la réduction du risque de pression sanguine élevée pendant l'enfance est évaluée par rapport à un enfant similaire qui a consommé une préparation pour nourrissons ou une préparation de suite comprenant des globules lipidiques ayant un diamètre modal, basé sur le volume, d'environ 0,5 µm et n'ayant pas d'enrobage comprenant des phospholipides.

3. Composition nutritionnelle pour son utilisation selon l'une quelconque des revendications précédentes, où la pression sanguine est la pression sanguine diastolique ou la pression sanguine artérielle, ou la pression sanguine diastolique et la pression sanguine artérielle.

4. Composition nutritionnelle choisie parmi une préparation pour nourrissons et une préparation de suite, comprenant des lipides, des protéines et des glucides digestibles, où la composition nutritionnelle comprend des globules lipidiques ayant un diamètre modal pondéré en fonction du volume d'au moins 1,0 µm et/ou où au moins 45 % en volume des globules lipidiques ont un diamètre compris entre 2 et 12 µm et où les globules lipidiques ont un enrobage comprenant des phospholipides, pour son utilisation dans la prévention de l'hypertension pédiatrique chez un enfant âgé de <13 ans.

5. Composition nutritionnelle pour son utilisation selon l'une quelconque des revendications précédentes, où la composition nutritionnelle est administrée à un nourrisson âgé de 0 à 6 mois, de préférence de 0 à 4 mois.

6. Composition nutritionnelle pour son utilisation selon la revendication 5, où le nourrisson est un nourrisson né à terme.

7. Composition nutritionnelle pour son utilisation selon la revendication 5 ou 6, où le nourrisson est un nourrisson en bonne santé.

8. Composition nutritionnelle pour son utilisation selon l'une quelconque des revendications précédentes, qui comprend au moins 0,5 % en poids de phospholipides par rapport à la quantité totale de lipides.

9. Composition nutritionnelle pour son utilisation selon l'une quelconque des revendications précédentes, où les phospholipides comprennent au moins 5 % en poids de sphingomyéline par rapport à la quantité totale de phospholipides.

10. Composition nutritionnelle pour son utilisation selon l'une quelconque des revendications précédentes, où les phospholipides sont dérivés de lipides du lait.

11. Composition nutritionnelle pour son utilisation selon l'une quelconque des revendications précédentes, où les lipides comprennent des triglycérides comprenant au moins 10 % en poids d'acide palmitique par rapport à la quantité totale d'acides gras, et où au moins 15 % en poids de l'acide palmitique, par rapport à la quantité totale d'acide palmitique, est présent en position sn-2 des triglycérides.

12. Composition nutritionnelle pour son utilisation selon l'une quelconque des revendications précédentes, où les lipides comprennent au moins 10 % en poids de matière grasse du lait, de préférence de matière grasse du lait de vache, par rapport à la quantité totale de lipides.

13. Composition nutritionnelle pour son utilisation selon l'une quelconque des revendications précédentes, où la préparation est sous forme de poudre, apte à être reconstituée avec de l'eau pour fournir une préparation prête à boire.
